# EUROPÄISCHE PATENTSCHRIFT

(11) **EP 0 426 951 B1**
(45) Veröffentlichungstag und Bekanntmachung des Hinweises auf die Patenterteilung: **23.02.1994**
(21) Anmeldenummer: 90114928.6
(22) Anmeldetag: 03.08.1990
(51) Int. Cl.: F16B 13/14

(54) **Ankerstange**
Fixing rod
Barre d'ancrage

(30) Priorität: 04.11.1989 DE 3936804
(43) Veröffentlichungstag der Anmeldung: 15.05.1991
(73) Patentinhaber: UPAT GMBH & CO, D-79312 Emmendingen (DE)
(72) Erfinder: Rinklake, Manfred, D-7830 Emmendingen 14 (DE); Frischmann, Albert, D-7832 Kenzingen (DE); Daryoush, Anisi, D-7831 Wyhl (DE); Steurer, Paul, D-7835 Teningen (DE)
(74) Vertreter: Rackette, Karl, Dipl.-Phys. Dr.-Ing

(56) Entgegenhaltungen:
- WO-A-88/07141
- WO-A-88/07142
- DE-A- 3 733 854
- DE-A- 3 741 345

## Beschreibung

Die Erfindung betrifft eine Ankerstange mit einem Schaftabschnitt und einem mittels einer aushärtbaren Masse in ein Bohrloch eines Bauwerkes einklebbaren vorderen Befestigungsabschnitt, der mehrere axial versetzte vom vorderen Einsteckende zum hinteren Lastaufnahmeende sich verjüngende Spreizkonen aufweist.

Derartige Ankerstangen sind bekannt und gestatten keine sichere Befestigung in der Rißzone einer Decke. Verläuft ein Riß im Bauwerk durch das Bohrloch, in dem die Ankerstange eingemörtelt ist, so kann es bei einem Aufweiten des Bohrloches infolge eines sich öffnenden Risses dazu kommen, daß der Riß entlang dem Umfang der um die Ankerstange gebildeten Mortelschale läuft und dabei die Verbindung der Mörtelschale mit dem Bauwerk löst, so daß die Ankerstange mit der Mörtelschale herausfallen kann.

In der WO-A-8807141 und der WO-A-8807142 wird vorgeschlagen, die Mantelfläche des Befestigungsabschnittes reibungsarm und wenig haftend auszubilden, damit beim Auftreten eines Risses durch die Mörtelschale ein Ablösen der Mörtelschale und deren Verschiebung gegenüber der Ankerstange möglich ist, so daß durch eine axiale Bewegung der Ankerstange ein Spreizdruck auf die gerissene Mörtelschale ausgeübt werden kann, um durch Nachspreizen der Mörtelschale infolge einer axialen Bewegung der Ankerstange ein Herausfallen der Ankerstange aus dem Bohrloch im Bauwerk zu vermeiden.

Die DE-A-3741345 lehrt ein Verankerungsverfahren für Befestigungselemente in der rißanfälligen Zugzone eines Bauwerkes, bei dem vor dem Einbringen der aushärtbaren Masse in der Wandung des Bohrloches in axialer Richtung verlaufende Nuten eingebracht werden. Die Nuten sollen den Riß durch die Mörtelmasse radial nach innen gegen die Ankerstange leiten. An dem Befestigungsabschnitt des bekannten Ankers sind Ringwulste angeordnet, die zu einer förmschlüssigen Verbindung mit der ausgehärteten Mörtelmasse führen und sicherstellen sollen, daß der Verankerungswert auch bei einem Öffnen des Risses erhalten bleibt.

Ein nicht für die Rißzone vorgesehener Verbunddübel aus Kunststoff ist in der DE-A-3733854 beschrieben und wird mittels einer Befestigungsschraube aufgespreizt und im Bohrloch versrannt. Um in brüchigem oder porösem Mauerwerk bessere Haltewerte zu erreichen, kann dieser Dübel auch unter Verwenden einer aushärtbaren Masse eingesetzt werden. Dazu verfügt er über einen Führungskanal, um den Mörtel einzuspritzen. Nach dem Aushärten des Mörtels ergibt sich eine äußerst stabile Verankerung zwischen dem Bauwerk, dem Verbunddübel und der in die ausgehärtete Masse eingreifenden Befestigungsschraube. Beim Auftreten eines Risses besteht jedoch die Gefahr des Herausfallens, da ein Nachspreizen des bekannten Verbunddübels nicht möglich ist.

Der Erfindung liegt die Aufgabe zugrunde, eine Ankerstange der eingangs genannten Art zu schaffen, die auch beim Aufweiten des Bohrloches infolge eines sich öffnenden Risses eine sichere Befestigung gewährleistet.

Diese Aufgabe wird erfindungsgemäß bei einer Ankerstange der eingangs genannten Art dadurch gelöst, daß ein auf den Befestigungsabschnitt aufschiebbarer Käfig vorgesehen ist, der über mehrere sich axial erstreckende und in die Verjüngungen zwischen den Spreizkonen im Querschnitt radial hineinragende flache Trennstege verfügt, die den Ringraum um den Befestigungsabschnitt unterbrechen, um ein Nachspreizen der ausgehärteten Masse durch Bilden von Mörtelschalensegmenten zu ermöglichen.

Die im Querschnitt radial verlaufenden flachen Trennstege bewirken eine Unterbrechung oder Schwächung der nach dem Aushärten der aushärtbaren Masse gebildeten Mörtelschale, so daß diese beim Aufweiten des Bohrloches infolge eines Risses entlang den Trennstegen aufbricht und durch ein Gleiten der Ankerstange in Richtung zum hinteren Lastaufnahmeende nachgespreizt wird.

Bei einem vorteilhaften Ausführungsbeispiel der Erfindung sind die aus Kunststoff bestehenden Trennstege an ihren beiden Enden jeweils durch einen Ring miteinander verbunden. Die Ankerstange kann in ihrem Befestigungsabschnitt mehrere axial verlaufende und sich radial bis zur Tiefe der Verjüngungen zwischen den Spreizkonen erstreckende Nuten zur Führung der flachen Trennstege aufweisen. Alternativ kann vorgesehen sein, daß die Ringe jeweils segmentartig ausgebildet und die flachen Stege an den nach innen weisenden Kanten sägezahnförmig komplementär zur axialen Kontur der Spreizkonen ausgespart sind.

Wenn die beiden Ringe als geschlossene Ringe ausgebildet sind, ist es vorteilhaft, den vom Einsteckende wegweisenden hinteren Ring des Käfigs mit einem Innendurchmesser zu versehen, der dem maximalen
Durchmesser der Spreizkonen und dem Durchmesser des den Spreizkonen benachbarten Schaftabschnittes entspricht. Der am Einsteckende angeordnete vordere Ring des Käfigs hat vorzugsweise einen Innendurchmesser, der kleiner als der maximale Durchmesser der Spreizkonen ist.

Zum Setzen der Ankerstange wird in das zylindrische Bohrloch eine aushärtbare Masse eingebracht und danach die Ankerstange eingedreht. Dabei ist es zweckmäßig, wenn der Käfig am einsteckseitigen Ende mit mehreren Mischflügeln versehen ist, so daß bei einem rotierenden Eintreiben der Ankerstange mit ihrem Käfig eine gute Durchmischung der Mörtelmasse stattfindet.

Um die Setztiefe der Ankerstange kontrollieren zu können, ist es zweckmäßig, wenn der Käfig am hinteren Ende Verlängerungsstege aufweist, die sich bis zu einem um den Schaft der Ankerstange umlaufenden Anschlagflansch erstrecken.

Die Erfindung wird nachfolgend anhand der Zeichnung näher beschrieben. Es zeigen:
- Fig. 1: den Befestigungsabschnitt der erfindungsgemäßen Ankerstange ohne den Schaftabschnitt, dessen vorderer Teil als glatter Zylinder und dessen hinterer Teil als Gewindebolzen ausgestaltet ist, in einer Seitenansicht,
- Fig. 2: den aufschiebbaren Käfig in einer Seitenansicht,
- Fig. 3: den Käfig gemäß Fig. 2 in einer Draufsicht auf den hinteren Ring,
- Fig. 4: die Ankerstange gemäß Fig. 1 nach dem Aufschieben des Käfigs gemäß Fig. 2 und dem Einmörteln in ein zylindrisches Bohrloch,
- Fig. 5: einen radialen Querschnitt gemäß der Linie V-V in Fig. 4,
- Fig. 6: einen radialen Querschnitt gemäß der Linie VI-VI in Fig. 4,
- Fig. 7: eine perspektivische Ansicht eines gegenüber Fig. 2 abgewandelten Käfigs mit am hinteren Ring angeformten Verlängerungsstegen, die in einen Anschlagflansch übergehen,
- Fig. 8: einen gegenüber Fig. 2 abgewandelten Käfig, dessen vorderer Ring mit Mischflügeln versehen ist,
- Fig. 9: eine gegenüber Fig. 1 abgewandelte Ankerstange,
- Fig. 10: einen gegenüber Fig. 2 abgewandelten Käfig, der in radialer Richtung seitlich auf eine Ankerstange gemäß Fig. 9 aufschiebbar ist,
- Fig. 11: eine Draufsicht auf den segmentförmig ausgesparten Käfig gemäß Fig. 10,
- Fig. 12: eine Draufsicht zur Veranschaulichung des Aufschiebens des Käfigs gemäß Fig. 10 auf die Ankerstange gemäß Fig. 9 und
- Fig. 13: die Ankerstange gemäß Fig. 9 nach dem Aufschieben des Käfigs.

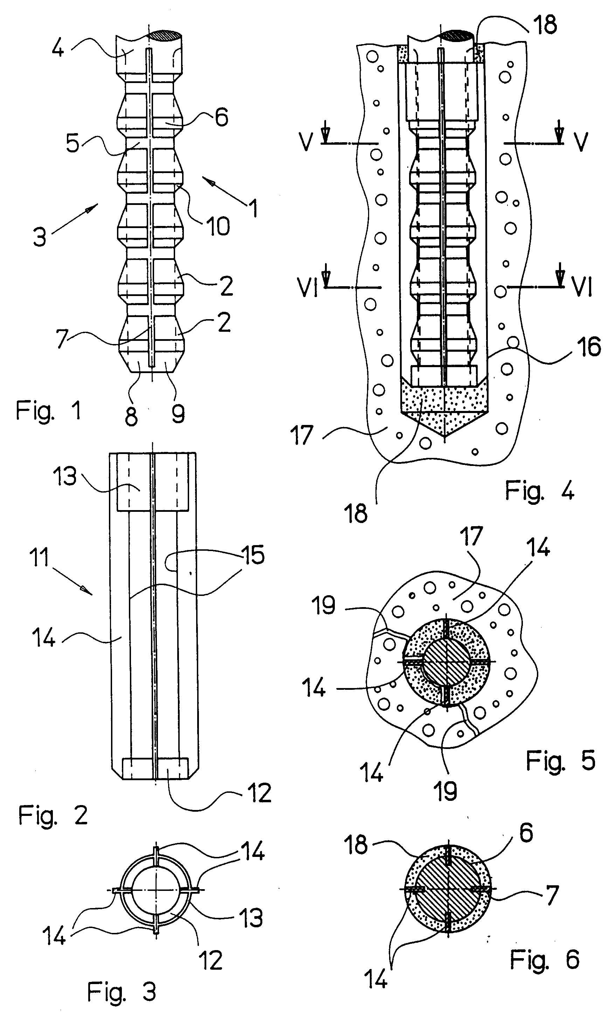

Fig. 1 veranschaulicht das Einsteckende einer Ankerstange 1 ohne deren Schaftabschnitt, dessen lastseitiges Ende mit einem Gewinde versehen ist. Zwischen dem mit einem Gewinde versehenen Abschnitt des Schaftabschnitts und dem mit mehreren Spreizkonen 2 versehenen Befestigungsabschnitt 3 befindet sich ein glatter Schaftabschnitt 4, dessen Außendurchmesser dem maximalen Durchmesser der Spreizkonen 2 entspricht. Die Spreizkonen 2 erstrecken sich jeweils zwischen einem zylindrischen Hals 5 und einer Überzugzone 6, deren Durchmesser dem Außendurchmesser des glatten Schaftabschnittes 4 entspricht. Die Spreizkonen 2 verjüngen sich somit in Richtung vom vorderen Ende der Ankerstange 1 zum hinteren Ende der Ankerstange 1.

Wie man in Fig. 1 erkennt, sind die Spreizkonen 2 mit axial verlaufenden Nuten 7 versehen, die sich in radialer Richtung bis zum Außendurchmesser der zylindrischen Hälse 5 erstrecken. In axialer Richtung erstrecken sich die Nuten 7 bis in dem glatten Schaftabschnitt 4.

Am vorderen Einsteckende 8 geht der vorderste Spreizkonus 2 in eine stumpfe Spitze 9 über, deren Winkel in etwa dem Konuswinkel der Spreizkonen 2 entspricht. Die Nuten 7 erstrecken sich in der in Fig. 1 dargestellten Weise bis in die stumpfe Spitze 9 hinein.

Zwischen den zylindrischen Hälsen 5 und den Überzugszonen 6 befinden sich steilkonische Abschnitte 10 in der in Fig. 1 dargestellten Weise.

Die Nuten 7 im Befestigungsabschnitt 3 der Ankerstange 1 gestatten es, den in Fig. 2 dargestellten Käfig 11 aus Kunststoff in axialer Richtung durch die Nuten 7 geführt aufzuschieben bis der Käfig 11 die der Fig. 4 entnehmbare Lage hat.

Die Gestalt des Käfigs 11 ergibt sich aus den Figuren 2 und 3. Der Käfig 11 besteht aus einem vorderen Ring 12 kleineren Durchmessers und einem hinteren Ring 13 größeren Durchmessers. Zwischen dem vorderen Ring 12 und dem hinteren Ring 13 erstrecken sich vier äquidistant angeordnete flache Trennstege 14, die in radialer Richtung nach innen und nach außen über den hinteren Ring 13 und in radialer Richtung nach außen über den vorderen Ring 12 hinausragen.

Die Stege können evtl. mit Filmscharnieren versehen sein, so daß die Stege bei drehender Montage nach hinten abknicken können. Der radiale Abstand zwischen den nach innen weisenden Kanten 15 der Trennstege 14 entspricht dem Durchmesser der zylindrischen Hälse 5. Die Dicke der Trennstege 14 ist gleich oder kleiner als die Breite der Nuten 7, so daß der Käfig 11 in axialer Richtung über das vordere Einsteckende 8 auf die Ankerstange 1 aufgeschoben werden kann, wenn die Trennstege 14 mit den Nuten 7 fluchten.

Fig. 4 zeigt die Ankerstange 1 nach dem Aufschieben des Käfigs 11. Außerdem zeigt Fig. 4 ein zylindrisches Bohrloch 16 im Befestigungsgrund 17 eines Bauwerkes, wobei das Bohrloch 16 vor dem Einschieben der mit dem Käfig 11 versehenen Ankerstange 1 mit einem Mörtel oder einer aushärtbaren Masse 18 teilweise gefüllt worden ist. Nach dem Einschieben der Ankerstange 1 mit dem Käfig 11 umgibt die aushärtbare Masse 18 in der in den Figuren 4, 5 und 6 dargestellten Weise die Ankerstange 1, wobei ein möglichst kleiner Teil der aushärtbaren Masse 18 den glatten Schaftabschnitt 4 umgibt. Der durch die Trennstege 14 unterbrochene Ringraum um den Befestigungsabschnitt 3 der Ankerstange 1 ist in der den Figuren 5 und 6 entnehmbaren Weise mit der aushärtbaren Masse umgeben, die nach dem Aushärten eine Mörtelschale bildet, welche durch die Trennstege 14 entlang den Trennstegen 14 durchtrennt oder sollbruchstellenartig stark geschwächt ist.

Fig. 5 zeigt im Querschnitt die aus der aushärtbaren Masse 18 gebildete Mörtelschale im Bereich eines zylindrischen Halses 5. Ein durch den Befestigungsgrund 17 verlaufender Riß 19 pflanzt sich bei dem in Fig. 5 gezeigten Beispiel zunächst entlang der Außenseite der durch die aushärtbare Masse 18 gebildeten Mörtelschale fort. Wie man in Fig. 5 erkennt, verläuft ein weiterer Abschnitt des Risses 19 parallel zum nächstliegenden Trennsteg 14 und von dort entlang dem Außenumfang des zylindrischen Halses 5, bevor er entlang einem weiteren Steg 14 wieder in den Befestigungsgrund 17 übergeht.

Wenn nach dem Aushärten der aushärtbaren Masse 18 ein derartiger Riß 19 auftritt, bildet die ausgehärtete Masse 18 eine Mörtelschale aus 4 Segmenten, die mit Hilfe der Spreizkonen 2 durch eine Zuglast auf die Ankerstange 1 radial gespreizt werden können. Auf diese Weise kann eine Vergrößerung des Bohrloches 18 infolge eines Risses 19 nicht zu einem Lockerwerden der Ankerstange 1 führen.

Fig. 6 zeigt einen Querschnitt durch die Ankerstange 1 in der durch die Linie VI-VI veranschaulichten Ebene in Fig. 4. Insbesondere erkennt man in Fig. 6 die in die Nuten 7 eingreifenden Trennstege 14.

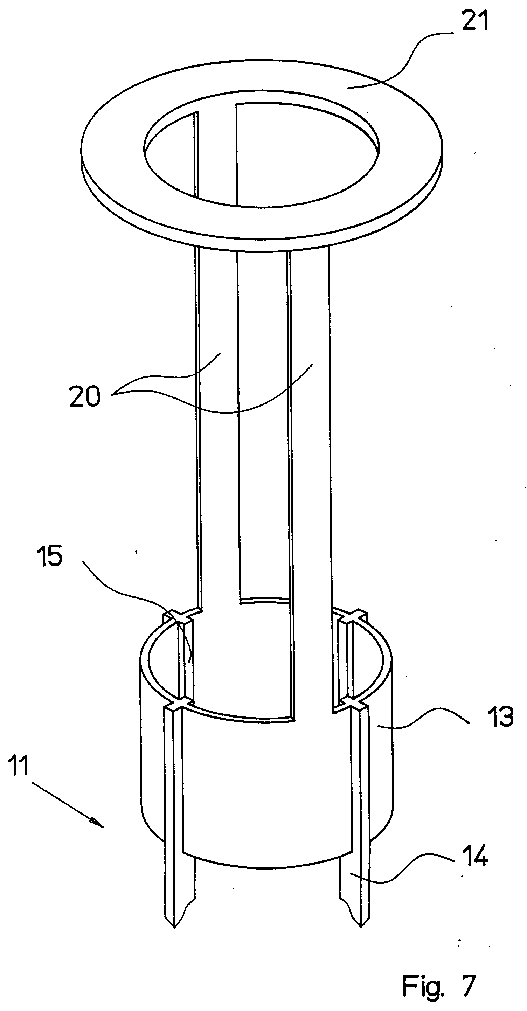

Um beim Einschieben der Ankerstange 1 in ein Bohrloch 14 eine definierte Setztiefe zu gewährleisten, kann gemäß Fig. 7 der in Fig. 2 dargestellte Käfig 11 an seinem hinteren Ring 13 mit flachen Verlängerungsstegen 20 versehen sein, die in der in Fig. 7 erkennbaren Weise mit einem Anschlagflansch 21 verbunden sind, der einen Außendurchmesser, welcher größer als der Durchmesser des Bohrloches 16 und einen Innendurchmesser aufweist, welcher gleich oder geringfügig größer als der Durchmesser des glatten Schaftabschnittes 4 der Ankerstange 1 ist.

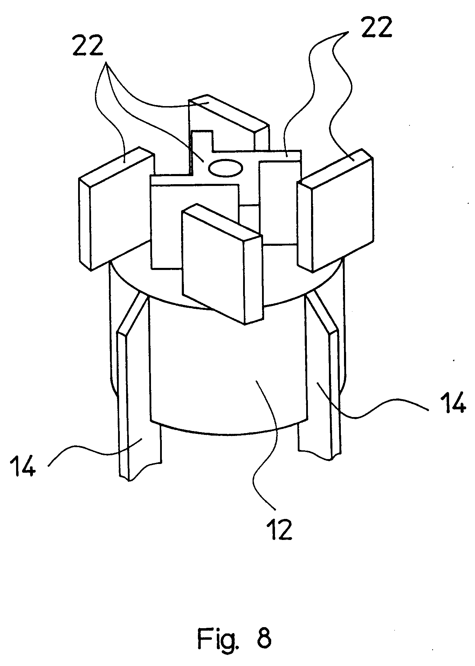

In Fig. 8 erkennt man ein Ausführungsbeispiel für einen Käfig 11, dessen vorderer Ring 12 mit einer Vielzahl von Mischflügeln 22 versehen ist, die es beim drehenden Setzen in eine nicht vorgemischte Masse oder Mörtel der Ankerstange 1 mit dem aufgeschobenen Käfig 11 gestatten, die in das Bohrloch 16 eingebrachte aushärtbare Masse 18 gut zu vermischen.

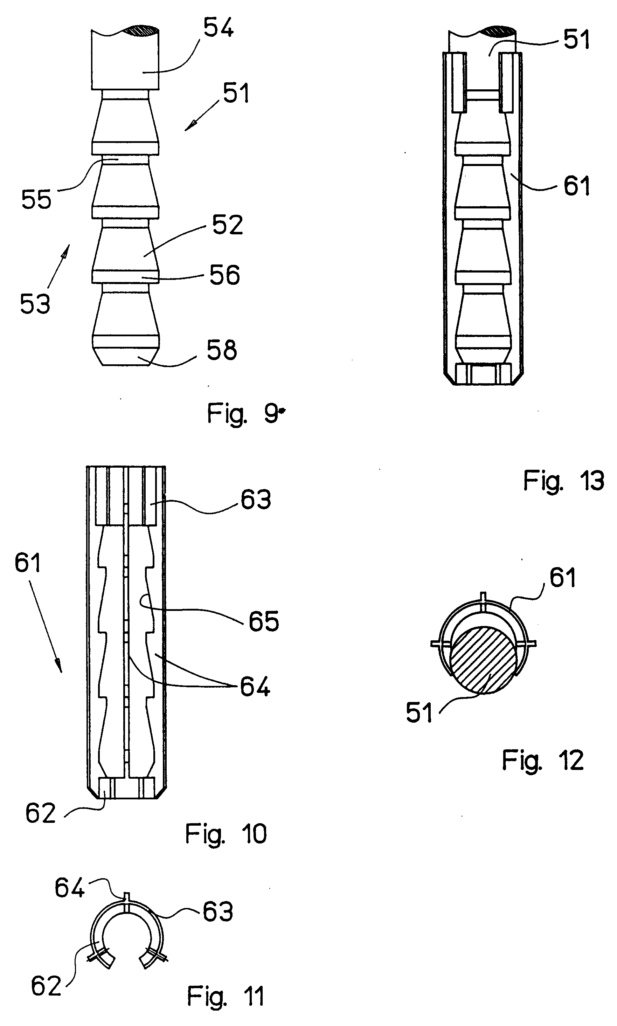

Die Fig. 9 bis 13 veranschaulichen Abwandlungen gegenüber der Ankerstange 1 und dem Käfig 11. In Fig. 9 erkennt man eine Ankerstange 51 mit mehreren Spreizkonen 52, die den Befestigungsabschnitt 53 der Ankerstange 51 bilden. Zwischen den Spreizkonen 52 befinden sich jeweils zylindrische Hälse 55. An den vorderen Enden der sich nach vorne erweiternden Spreizkonen 52 sind jeweils zylindrische Überzugszonen 56 vorgesehen.

Am vorderen Einsteckende 58 ist eine stumpfe Spitze 59 vorgesehen. Nuten 7, wie bei dem anhand der Figuren 1 bis 6 beschriebenen Ausführungsbeispiel, sind bei der Ankerstange 51 gemäß den Figuren 9 bis 13 nicht vorhanden.

In Fig. 10 erkennt man einen Käfig 61, der einen vorderen Ring 62 und einen hinteren Ring 63 aus verformbarem Kunststoff aufweist, wobei die Ringe 62, 63 in der am besten in Fig. 11 erkennbaren Weise segmentartig ausgespart sind, so daß die Ringe 62, 63 in der sich aus Fig. 12 ergebenden Weise federnd aufgebogen werden können, um seitlich über die Ankerstange 51 aufgeschoben zu werden.

Der vordere Ring 62 und der hintere Ring 63 sind über drei flache radial orientierte und sich axial erstreckende Trennstege 64 miteinander verbunden. Die nach innen weisenden Kanten 65 der Trennstege 64 sind sägezahnförmig komplementär zur axialen Kontur der Spreizkonen 52 ausgespart, so daß in analoger Weise zu dem in den Figuren 4 bis 6 dargestellten Ausführungsbeispiel Mörtelschalensegmente gebildet werden, die jeweils durch Trennstege 64 voneinander getrennt sind.

Nach dem Aufschieben des Käfigs 61 in der in Fig. 12 dargestellten Weise auf die Ankerstange 51 weist der Befestigungsabschnitt 53 der Ankerstange 51 die in Fig. 13 dargestellte Gestalt auf. Die in Fig. 13 dargestellte Anordnung kann entsprechend Fig. 4 in ein zylindrisches Bohrloch 16 eingebracht werden, wobei nach dem Aushärten der aushärtbaren Masse 18 zwischen den Trennstegen 64 Mörtelschalensegmente gebildet werden, die nach dem Auftreten eines Risses durch eine Zuglast auf der Ankerstange 51 nachgespreizt werden können.

## Patentansprüche

1. Ankerstange mit einem Schaftabschnitt und einem mittels einer aushärtbaren Masse in ein Bohrloch eines Bauwerkes einklebbaren vorderen Befestigungsabschnitt, der mehrere axial versetzte vom vorderen Einsteckende zum hinteren Lastaufnahmeende sich verjüngende Spreizkonen aufweist, **dadurch gekennzeichnet,** daß ein auf den Befestigungsabschnitt (3, 53) aufschiebbarer Käfig (11, 61) vorgesehen ist, der über mehrere sich radial erstreckende und in die Verjüngungen (5, 55) zwischen den Spreizkonen (2, 52) im Querschnitt radial hineinragende flache Trennstege (14, 64) verfügt, die den Ringraum um den Befestigungsabschnitt (3, 53) unterbrechen, um ein Nachspreizen der ausgehärteten Masse durch Bilden von Mörtelschalensegmenten zu ermöglichen.

2. Ankerstange nach Anspruch 1, dadurch gekennzeichnet, daß die Trennstege (14, 64) an ihren beiden Enden jeweils durch einen Ring (12, 13, 62, 63) verbunden sind.

3. Ankerstange nach Anspruch 1 oder 2, dadurch gekennzeichnet, daß die Ankerstange (1) im Befestigungsabschnitt (3) mehrere axial verlaufende und sich radial bis zur Tiefe der Verjüngungen (5) erstreckende Nuten (7) zur Führung der flachen Trennstege (14) aufweist.

4. Ankerstange nach Anspruch 2 oder 3, dadurch gekennzeichnet, daß der vom Einsteckende (8, 58) wegweisende hintere Ring (13, 63) des Käfigs (11, 61) einen Innendurchmesser hat, der dem maximalen Durchmesser der Spreizkonen (2, 52) und dem Durchmesser des den Spreizkonen (2, 52) benachbarten Schaftabschnittes (4, 54) entspricht.

5. Ankerstange nach Anspruch 4, dadurch gekennzeichnet, daß der am Einsteckende (8, 58) angeordnete vordere Ring (12, 62) des Käfigs (11, 61) einen Innendurchmesser hat, der kleiner als der maximale Durchmesser der Spreizkonen (2, 52) ist.

6. Ankerstange nach Anspruch 2, dadurch gekennzeichnet, daß die Ringe (62, 63) jeweils segmentartig ausgespart sind.

7. Ankerstange nach einem der vorstehenden Ansprüche, dadurch gekennzeichnet, daß der Käfig (11, 61) aus elastischem Kunststoff hergestellt ist.

8. Ankerstange nach Anspruch 6 und 7, dadurch gekennzeichnet, daß die flachen Trennstege (64) auf den nach innen weisenden Kanten (65) sägezahnförmig komplementär zur axialen Kontur der Spreizkonen (52) ausgespart sind.

9. Ankerstange nach einem der vorstehenden Ansprüche, dadurch gekennzeichnet, daß der Käfig (11, 61) am einsteckseitigen Ende (12, 62) mit mehreren Mischflügeln (22) versehen ist.

10. Ankerstange nach einem der vorstehenden Ansprüche, dadurch gekennzeichnet, daß der Käfig (11, 61) am hinteren Ende (13, 63) Verlängerungsstege (20) aufweist, die sich bis zu einem um den Schaftabschnitt (4, 54) der Ankerstange (1, 51) umlaufenden Anschlagflansch (21) erstrecken.

## Claims

1. An anchor rod having a shank portion and a front fixing portion which can be cemented into a bore hole of a structure by means of a hardenable material and which has a plurality of axially displaced spreading cones which taper inwardly from the front insertion end to the rear load-receiving end characterised in that there is provided a cage (11, 61) which can be pushed on to the fixing portion (3, 53) and which has a plurality of radially extending flat separating limbs (14, 64) which project radially in cross-section into the reduced portions (5, 55) between the spreading cones (2, 52) and which interrupt the annular space around the fixing portion (3, 53) in order to permit subsequent spreading of the hardened material by virtue of forming mortar shell segments.

2. An anchor rod according to claim 1 characterised in that the separating limbs (14, 64) are connected at each of their two ends by a respective ring (12, 13, 62, 63).

3. An anchor rod according to claim 1 or claim 2 characterised in that the anchor rod (1) has in the fixing portion (3) a plurality of axially extending grooves (7) which extend radially as far as the depth of the reduced portions (5), for guiding the flat separating limbs (14).

4. An anchor rod according to claim 2 or claim 3 characterised in that the rear ring (13, 63) of the cage (11, 61), which faces away from the insertion end (8, 58), is of an inside diameter which corresponds to the maximum diameter of the spreading cones (2, 52) and the diameter of the shank portion (4, 54) which is adjacent to the spreading cones (2, 52).

5. An anchor rod according to claim 4 characterised in that the front ring (12, 62) of the cage (11, 61), which is arranged at the insertion end (8, 58), is of an inside diameter which is smaller than the maximum diameter of the spreading cones (2, 52).

6. An anchor rod according to claim 2 characterised in that the rings (62, 63) each have an opening therein defining a segment-like configuration.

7. An anchor rod according to one of the preceding claims characterised in that the cage (11, 61) is made from elastic plastics material.

8. An anchor rod according to claim 6 and claim 7 characterised in that the flat separating limbs (64) are recessed on the inwardly facing edges (65) in a sawtooth configuration in complementary fashion to the axial contour of the spreading cones (52).

9. An anchor rod according to one of the preceding claims characterised in that the cage (11, 61) is provided with a plurality of mixing blades (22) at the insertion end (12, 62).

10. An anchor rod according to one of the preceding claims characterised in that at the rear end (13, 63) the cage (11, 61) has extension limbs (20) which extend to an abutment flange (21) which extends around the shank portion (4, 54) of the anchor rod (1, 51).

## Revendications

1. Tige d'ancrage avec une partie en forme de tige et une partie avant d'encastrement susceptible d'adhérer dans le perçage d'un ouvrage au moyen d'un mélange durcissant, et présentant plusieurs cônes à expansion disposés dans le sens axial qui vont en se rétrécissant de l'extrémité avant à introduire, en direction de l'extrémité arrière recevant la charge, caractérisée en ce qu'une cage coulissante (11, 61) disposée sur la partie d'encastrement (3, 53), est munie de plusieurs nervures de séparation plates (14, 64) qui s'étendent dans le sens axial et qui, vues en coupe, font saillie radialement dans les rétrécissement (5, 55) entre les cônes d'expansion (2, 52), ces nervures interrompant l'espace annulaire autour de la partie d'encastrement (3, 53), pour permettre une remise en expansion du mélange durcissant par formation de segments d'enrobage de mortier.

2. Tige d'ancrage selon la revendication 1, caractérisée en ce que les nervures de séparation (14, 64) sont toutes reliées entre elles à chacune de leurs extrémités par un anneau (12, 13, 62, 63).

3. Tige d'ancrage selon la revendication 1 ou 2, caractérisée en ce que la tige d'ancrage (1) comporte sur sa partie d'encastrement (3) plusieurs rainures (7) disposées dans le sens axial et s'étendant radialement jusqu'au fond des rétrécissements (5) pour guider les nervures plates de séparation (14).

4. Tige d'ancrage selon la revendication 2 ou 3, caractérisée en ce l'anneau arrière (13, 63) de la cage (11, 61) le plus éloigné de l'extrémité d'insertion (8, 58) a un diamètre intérieur qui correspond au diamètre maximal des cônes d'expansion (2, 52) et au diamètre de la partie en forme de tige (4, 54) voisine des cônes d'expansion (2,52).

5. Tige d'ancrage selon la revendication 4, caractérisée en ce que l'anneau avant (12, 62) de la cage (11, 61), disposé à l'extrémité d'insertion (8, 58), a un diamètre intérieur inférieur au diamètre maximal des cônes d'expansion (2, 52).

6. Tige d'ancrage selon la revendication 2, caractérisée en ce que les anneaux (62, 63) sont tous deux prévus en forme de segments.

7. Tige d'ancrage selon l'une des revendications précédentes, caractérisée en ce que la cage (11, 61) est en plastique déformable.

8. Tige d'ancrage selon les revendications 6 et 7, caractérisée en ce que les nervures plates de séparation (64) présentent, sur leurs bords dirigés vers l'intérieur (65), un profil en dents de scie qui s'ajuste au profil axial des cônes d'expansion (52).

9. Tige d'ancrage selon l'une des revendications précédentes, caractérisée en ce que la cage (11, 61) comporte, à son extrémité d'insertion (12, 62), plusieurs ailettes mélangeuses (22).

10. Tige d'ancrage selon l'une des revendications précédentes, caractérisée en ce que la cage (11, 61) comporte à son extrémité arrière (13, 63), des nervures de prolongement (20) qui s'étendent jusqu'à une collerette de butée (21) entourant la partie en forme de tige (4, 54) de la tige d'ancrage (1, 51).
